# FASCICULE DE BREVET EUROPEEN

(11) **EP 1 471 713 B1**
(45) Date de publication et mention de la délivrance du brevet: **24.05.2006**
(21) Numéro de dépôt: 04290227.0
(22) Date de dépôt: 28.01.2004
(51) Int. Cl.: H04L 29/08, G06F 17/30, H04L 29/12

(54) **Procédé et système de contrôle d'accès à des sites internet au moyen d'un serveur cache**
Verfahren und System zur Steuerung des Zugriffs auf Internet-Sites mittels eines Cache-Servers
Method and system for controlling access to Internet sites via cache server

(30) Priorité: 31.03.2003 FR 0303956
(43) Date de publication de la demande: 27.10.2004
(73) Titulaire: FRANCE TELECOM, 75015 Paris (FR)
(72) Inventeur: Nezzari, Amar, 14000 Caen (FR)
(74) Mandataire: de Roquemaurel, Bruno

(56) Documents cités:
- EP-A- 1 191 438
- WO-A-02/48830
- FR-A- 2 788 352
- FR-A- 2 800 224
- US-A- 6 052 730

## Description

La présente invention concerne un procédé et un système permettant la mise en place d'un service de contrôle d'accès à des sites Internet.

Elle s'applique notamment, mais non exclusivement, aux fournisseurs d'accès offrant un accès au réseau Internet et souhaitant élargir leurs offres d'accès en proposant des services à valeur ajoutée à leurs clients disposant d'un terminal fixe ou mobile équipé d'un logiciel de navigation Internet. Elle s'applique également aux fournisseurs de contenus ou de services souhaitant diffuser des informations payantes ou fournir des services payants.

Dans ce contexte, il est souhaitable de pouvoir associer un niveau de tarification de connexion à au moins certaines adresses de sites Internet, ce niveau allant de la gratuité à une tarification totale d'accès au service. De cette manière, les fournisseurs d'accès au réseau Internet qui facturent le service de connexion au temps de connexion peuvent pour certains sites Internet offrir une connexion gratuite ou à un prix inférieur au prix normal.

Cet objectif nécessite de pouvoir reconnaître et identifier le destinataire et le site émetteur de chaque réponse reçue du réseau Internet, et donc de mettre en place un mécanisme de gestion de sessions.

Or les accès au réseau Internet par l'intermédiaire d'un logiciel de navigation sont basés sur le protocole HTTP (HyperText Transfer Protocol) qui est dit "sans état", c'est-à-dire que les serveurs Web accédés par l'intermédiaire du réseau ne mémorisent pas les requêtes précédentes reçues d'un même utilisateur. Il en résulte que le protocole HTTP ne prévoit pas de mécanismes de gestion de session. Il est donc nécessaire de prévoir que d'une part, le serveur Web assure une telle gestion en générant un identifiant de session et en gérant un état et une date limite de validité, associés à l'identifiant de session, et d'autre part, que l'utilisateur renvoie l'identifiant de session à chaque fois qu'il émet une nouvelle requête destinée au serveur Web.

Pour mettre en oeuvre une telle gestion de session, plusieurs mécanismes sont aujourd'hui utilisés.

Ainsi, il existe un premier mécanisme consistant à insérer dans un formulaire un champ caché contenant un identifiant de session. Chaque réponse fournie par le serveur à l'utilisateur est constituée par un formulaire contenant un identifiant de session caché dans une entrée "Hidden", ce formulaire étant complété par l'utilisateur et renvoyé au serveur. Ce mécanisme présente l'inconvénient d'obliger l'utilisation de formulaires. En outre, dans le cas où l'utilisateur commande des retours en arrière (accès aux pages précédemment affichées) c'est-à-dire annule des séries d'actions, l'identifiant de session risque d'être perdu.

Il est également connu d'utiliser un mécanisme de réécriture d'adresse Web ou URL (Universal Resource Locator). Ce mécanisme consiste à conserver un identifiant de session dans les adresses de pages Web envoyées par le serveur. Ce mécanisme nécessite d'analyser systématiquement la page Web envoyée pour y changer chaque adresse URL qui y est mentionnée. En outre, lorsque la page Web contient des scripts du type Java ou Visual Basic des dysfonctionnements peuvent apparaître si ces scripts génèrent eux aussi des adresses URL.

Il est également connu d'utiliser ce que l'on appelle des "Cookies" pour conserver un identifiant de session. Un cookie est un fichier de données qui est stocké par le serveur dans le terminal de l'utilisateur. Il en résulte que la durée de vie d'un cookie dépasse celle d'une session. Ce fichier est intégré dans l'entête de chaque requête HTTP émise par l'utilisateur à destination du serveur et se retrouve dans la réponse du serveur. Il s'avère que cette solution est largement dépendante de la configuration des paramètres du logiciel de navigation installé sur le terminal de l'utilisateur. En effet, ces logiciels disposent d'un paramètre que l'utilisateur peut modifier pour interdire l'utilisation de cookies.

Pour mettre en place une gestion de session, il est aussi connu d'utiliser une connexion SSL (Secure Sockets Layer) spécifiée par le protocole HTTPS (HTTP sécurisé) qui contient une gestion de session. Cette solution nécessite la mise en place d'une connexion sécurisée entre le serveur et l'utilisateur. Dans ce cas, toutes les requêtes sont transparentes d'un point de vue de protocole pour les équipements en coupure de flux de type proxy. En outre, la gestion des identifiants de session doit être effectuée par une entité du système d'information, ce qui rend sa mise en oeuvre prohibitive.

Pour conserver un identifiant de session, il est également connu d'utiliser des mécanismes basés sur ce que l'on appelle les "objets de session" ASP (Active Server Pages) ou JSP (Java Server Pages) qui sont fournis par un émulateur spécifique de ASP ou JSP. Cette solution nécessite la mise en oeuvre d'un serveur HTTP utilisant impérativement un moteur ASP ou JSP, ce qui est assez rare.

Les solutions décrites ci-avant sont donc loin d'être transparentes pour les utilisateurs.

Par ailleurs, on a développé le protocole ICAP (Internet Content Adaptation Protocol) pour standardiser les échanges entre les équipements intégrés dans les architectures Web (Serveurs Web, cache, routeurs, ...) et les systèmes de transformation de contenu. Ce protocole repose sur le principe simple qu'à toute requête HTTP correspond une réponse provenant d'un serveur Web ou d'un cache. Il suffit donc de transformer la requête et/ou la réponse pour offrir un service de transformation de contenu. Ce protocole se borne donc à définir les communications entre des clients ICAP et des serveurs ICAP assurant le service de transformation. Les services de transformation consistent par exemple à effectuer un filtrage de virus ou de contenu.
Toutefois, ce protocole n'est pas spécifiquement conçu pour réaliser une gestion de session HTTP.

Le document WO 02/48830 décrit un système permettant d'analyser des requêtes et des pages de réponses échangées entre des utilisateurs et des serveurs, afin d'analyser l'activité en ligne des utilisateurs. Ce document décrit un mécanisme d'interception des données échangées et de gestion de session de navigation permettant de regrouper ces données par utilisateur et pour une période de navigation.

La présente invention a pour but de supprimer ces inconvénients. Cet objectif est atteint par la prévision d'un procédé de contrôle d'accès à des sites Internet de fournisseurs de contenus ou de services, pour contrôler l'accès à ces sites par des terminaux par l'intermédiaire d'un réseau de transmission de données.

Selon l'invention, ce procédé comprend les étapes consistant à :
- mettre en oeuvre un service de contrôle d'accès qui intercepte toutes les réponses émises par les sites, destinées aux terminaux d'utilisateurs,
- analyser chacune des réponses interceptées pour en extraire une information d'identification d'utilisateur, une adresse de site, et un code d'accès de site,
- déterminer si l'adresse de site extraite correspond à un site dont l'accès est contrôlé, et déterminer s'il existe une session en cours correspondant à l'information d'identification d'utilisateur extraite,
- s'il n'existe pas de session en cours correspondant à l'information d'identification d'utilisateur extraite et si le code d'accès extrait est valide, ouvrir une session pour l'utilisateur correspondant à l'information d'identification d'utilisateur extraite,
- modifier toutes les réponses interceptées incluant une information d'identification d'utilisateur et un code d'accès de site correspondant à une session en cours, de manière à déclencher sur le terminal de l'utilisateur l'affichage d'une commande de fermeture de session que l'utilisateur peut activer lorsqu'il souhaite ne plus accéder au site, et
- retransmettre vers les utilisateurs les réponses interceptées et modifiées.

Selon une particularité de l'invention, l'information d'identification d'utilisateur extraite des réponses interceptées est une adresse d'utilisateur dans le réseau de transmission de données, le procédé comprenant en outre une étape de détermination d'un identifiant d'utilisateur à partir de l'adresse d'utilisateur extraite de chaque réponse interceptée, à l'aide d'une table de correspondance.

Selon une autre particularité de l'invention, si l'adresse d'utilisateur extraite d'une réponse interceptée ne correspond pas à un identifiant d'utilisateur, la réponse interceptée est transmise à l'utilisateur sans modification.

Selon encore une autre particularité de l'invention, s'il n'existe pas de session en cours correspondant à l'information d'identification d'utilisateur extraite, si l'adresse d'utilisateur extraite d'une réponse interceptée correspond à un identifiant d'utilisateur, et si l'adresse de site extraite correspond à un site dont l'accès est contrôlé, la réponse interceptée est modifiée de manière à déclencher sur le terminal de l'utilisateur l'affichage d'une page invitant l'utilisateur à saisir un code d'accès au site correspondant à l'adresse de site extraite.

Selon encore une autre particularité de l'invention, s'il n'existe pas de session en cours correspondant à l'information d'identification d'utilisateur extraite et si l'adresse de site extraite ne correspond pas à un site dont l'accès est contrôlé, la réponse interceptée est transmise à l'utilisateur sans modification.

Selon encore une autre particularité de l'invention, s'il existe une session en cours correspondant à l'information d'identification d'utilisateur extraite et si l'adresse de site extraite ne correspond pas à un site dont l'accès est contrôlé, la réponse interceptée est modifiée de manière à déclencher sur le terminal de l'utilisateur l'affichage d'une page invitant l'utilisateur à émettre une commande de fermeture de la session en cours.

Selon encore une autre particularité de l'invention, si une réponse interceptée contient une commande de fermeture de session, il comprend en outre une étape de fermeture de session pour fermer une session correspondant à l'information d'identification d'utilisateur extraite de la réponse.

Avantageusement, la fermeture d'une session est accompagnée de la modification de la réponse correspondante, incluant la commande de fermeture de session, de manière à déclencher sur le terminal de l'utilisateur l'affichage d'une page invitant l'utilisateur à se reconnecter à un site dont l'accès est protégé.

L'invention concerne également un système de contrôle d'accès à des sites Internet de fournisseurs de contenus ou de services, pour contrôler l'accès à ces sites par des terminaux d'utilisateurs par l'intermédiaire d'un réseau de transmission de données.

Selon l'invention, ce système comprend un serveur de contrôle d'accès connecté à un serveur cache interposé entre les terminaux d'utilisateurs et le réseau de transmission de données, le serveur cache étant conçu pour intercepter toutes les réponses provenant du réseau et destinées aux terminaux d'utilisateurs et pour transmettre les réponses interceptées au serveur de contrôle d'accès, le serveur de contrôle d'accès comprenant :
- des moyens pour extraire de chacune des réponses interceptées une information d'identification d'utilisateur, une adresse de site, et un code d'accès de site,
- des moyens pour déterminer si l'adresse de site extraite correspond à un site dont l'accès est contrôlé, et s'il existe une session en cours correspondant à l'information d'identification d'utilisateur extraite,
- des moyens pour ouvrir une session pour l'utilisateur correspondant à l'information d'identification d'utilisateur extraite s'il n'existe pas de session en cours correspondant à l'information d'identification d'utilisateur extraite et si le code d'accès extrait est valide,
- des moyens pour modifier toutes les réponses interceptées incluant une information d'identification d'utilisateur et un code d'accès de site correspondant à une session en cours, de manière à déclencher sur le terminal de l'utilisateur l'affichage d'une commande de fermeture de session que l'utilisateur peut activer lorsqu'il souhaite ne plus accéder au site, et
- des moyens pour retransmettre vers le serveur cache à destination des terminaux d'utilisateurs les réponses interceptées et modifiées.

Avantageusement, l'information d'identification d'utilisateur extraite des réponses interceptées est une adresse d'utilisateur dans le réseau de transmission de données, le système comprenant en outre des moyens pour déterminer à partir de l'adresse de l'utilisateur un identifiant d'utilisateur, à l'aide d'une table de correspondance.

De préférence, la table de correspondance est un annuaire de type LDAP.

Selon une particularité de l'invention, ce système comprend une mémoire cache conçue pour stocker des réponses à des interrogations d'identifiant d'utilisateur, fournies par l'annuaire de type LDAP, en vue de pouvoir fournir plus rapidement une réponse à une interrogation lorsque la réponse est stockée dans la mémoire cache.

Selon une autre particularité de l'invention, ce système comprend un fichier de suivi de session comprenant pour chaque session un identifiant d'utilisateur, un identifiant de site, un état en cours ou fermé de la session, une durée de session et une heure de début de session.

De préférence, les réponses interceptées sont conformes au protocole HTTP et les communications entre le serveur cache et le serveur de contrôle d'accès sont conformes au protocole ICAP.

Un mode de réalisation préféré de l'invention sera décrit ci-après, à titre d'exemple non limitatif, avec référence aux dessins annexés dans lesquels :
La figure 1 représente un système de contrôle d'accès selon l'invention intégré dans la liaison entre des terminaux d'utilisateurs et des serveurs de fournisseurs de contenus ou de services accessibles par le réseau Internet ;
La figure 2 montre plus en détail le système représenté sur la figure 1 ;
La figure 3 illustre sous la forme d'un organigramme un procédé de contrôle d'accès selon l'invention mis en oeuvre dans le système représenté sur la figure 2 ;
La figure 4 montre en détail une partie du système représenté sur la figure 2.

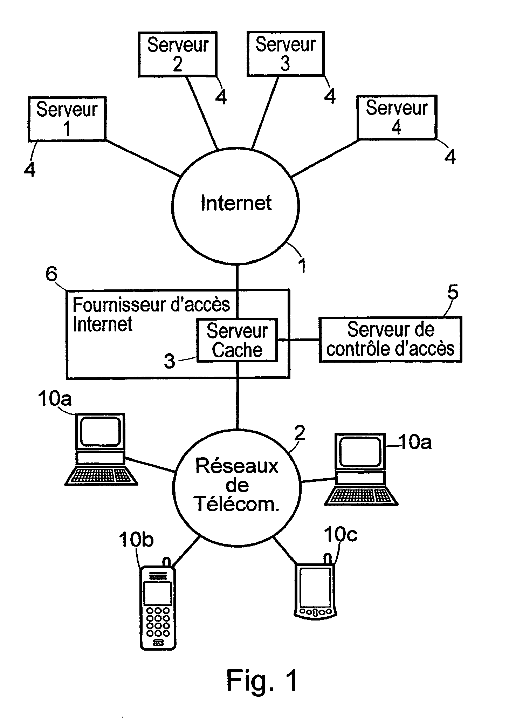

Le système de contrôle d'accès à des sites Internet, représenté sur la figure 1 est conçu pour s'interfacer entre des terminaux d'utilisateurs 10a-10c, fixes ou mobiles, et le réseau Internet 1 donnant accès à des serveurs 4 de fournisseurs de contenus ou de services. D'une manière classique, les terminaux 10a-10c d'utilisateurs sont connectés au réseau Internet 1 par l'intermédiaire d'un réseau public de télécommunication 2, tel qu'un réseau téléphonique fixe ou mobile et d'un fournisseur d'accès Internet 6.

Un tel fournisseur d'accès met en oeuvre généralement un serveur cache 3 situé sur la liaison entre le réseau de télécommunication 2 et le réseau Internet 1.

Selon l'invention, pour mettre en place un contrôle d'accès aux serveurs 4, le serveur 3 est connecté à un serveur de contrôle d'accès 5, et communique avec ce dernier conformément au protocole ICAP, de manière à ce que les réponses HTTP émises par les serveurs 4 en direction des terminaux d'utilisateurs 10a-10c, soient déroutées par le serveur cache 3 vers le serveur de contrôle d'accès 5. Par ailleurs, le serveur 5 est réalisé sous la forme d'un service ICAP conçu selon l'invention pour assurer une gestion de sessions.

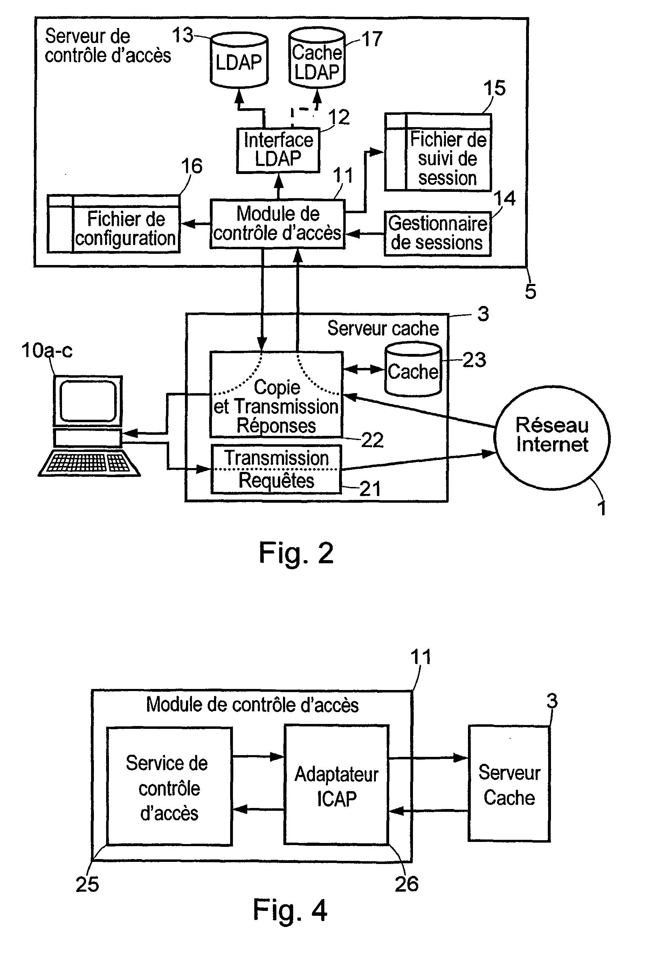

La figure 2 montre plus en détail le serveur cache 3 et le serveur de contrôle d'accès 5. Le serveur cache 3 comprend un module 21 conçu pour retransmettre vers le réseau Internet 1 toutes les requêtes émises par les terminaux d'utilisateurs 10a-10c connectés au serveur 3, ainsi qu'un module 22 conçu pour retransmettre vers le serveur de contrôle d'accès 5 toutes les réponses HTTP reçues des serveurs 4 et destinées aux terminaux d'utilisateurs 10a-10c. Le serveur 3 comprend également une mémoire de stockage 23 pour stocker temporairement toutes ces réponses en vue de les restituer sans accéder au réseau Internet 1 si les terminaux pour lesquels elles étaient destinées les redemandent.

Sur la figure 2, le serveur de contrôle d'accès 5 comprend :
- un module principal 11 assurant les fonctions proprement dites de contrôle d'accès, ce module ayant accès à un fichier de configuration 16 du service de contrôle d'accès, et gérant les échanges avec le serveur cache 3,
- un module de gestion de sessions 14 pilotant le module de contrôle d'accès 11 pour assurer la mise à jour d'un fichier de suivi de session 15, et
- un module d'interface d'annuaire 12 connecté au module 11 et par exemple mettant en oeuvre le protocole LDAP (Lightweight Directory Access Protocol), pour donner accès à un annuaire LDAP 13 d'utilisateurs du fournisseur d'accès.

Les échanges entre le module 11 et le serveur cache 3 sont conformes au protocole ICAP. Ainsi, le serveur cache 3 transmet toutes les réponses HTTP reçues encapsulées dans des requêtes ICAP, ces réponses sont ensuite traitées par le module 11 et renvoyées au serveur 3 encapsulées dans une réponse ICAP.

L'annuaire 13 qui est mis à jour par le service de connexion offert par le fournisseur d'accès, contient notamment des identifiants ID-CL des utilisateurs par exemple vis-à-vis du fournisseur d'accès, chaque identifiant d'utilisateur ID_CL étant associé le cas échéant avec une adresse IP (Internet Protocol) attribuée par le fournisseur à l'utilisateur lorsque celui-ci se connecte au réseau Internet 1.

Pour une plus grande efficacité, le serveur 5 peut également comprendre une mémoire cache LDAP 17 pour stocker temporairement les réponses fournies par l'annuaire LDAP 13 au cas où le module de contrôle d'accès 11 aurait besoin de réitérer une requête d'interrogation de l'annuaire pour un même utilisateur.

Le fichier de configuration 16 contient notamment les informations suivantes :
- le chemin complet d'accès au fichier de suivi de session 15,
- l'identification du port de communication à utiliser par le module de contrôle d'accès 11 pour dialoguer avec ou écouter le module de gestion de sessions 14,
- la longueur maximale de la file d'attente associée au canal de communication entre le module de contrôle d'accès 11 et le module de gestion de session 14,
- l'adresse URL d'une page Web comportant l'affichage d'un bandeau de fenêtre d'écran contenant un bouton de commande de déconnexion d'un site Web dont l'accès est contrôlé,
- la hauteur de ce bandeau,
- l'adresse URL d'une page Web donnant contenant un bouton de déconnexion d'un site Web dont l'accès est contrôlé,
- l'adresse URL d'une page Web donnant accès à une commande de reconnexion à un site Web dont l'accès est contrôlé, et
- une liste d'adresses URL de sites dont l'accès est contrôlé, chaque adresse étant associée à un identifiant d'URL ID_URL servant de code d'accès confidentiel, et l'adresse URL d'une page d'accueil du site contenant un formulaire de connexion au site.

Le fichier de suivi de sessions 15 comprend les informations suivantes pour chaque session en cours :
- un identifiant d'utilisateur ID_CL de l'utilisateur qui accède au site identifié par ID_URL pendant la session,
- un identifiant ID_URL du site dont l'accès est contrôlé et qui est accédé par l'utilisateur pour la session,
- un indicateur d'état de session signalant si la session est en cours ou terminée,
- la durée de session sous la forme d'un nombre entier représentant le nombre de secondes écoulées depuis l'ouverture de la session, ce champ étant à 0 si la session est en cours, et
- l'heure du début de la session, ce champ étant à 0 si la session est terminée.

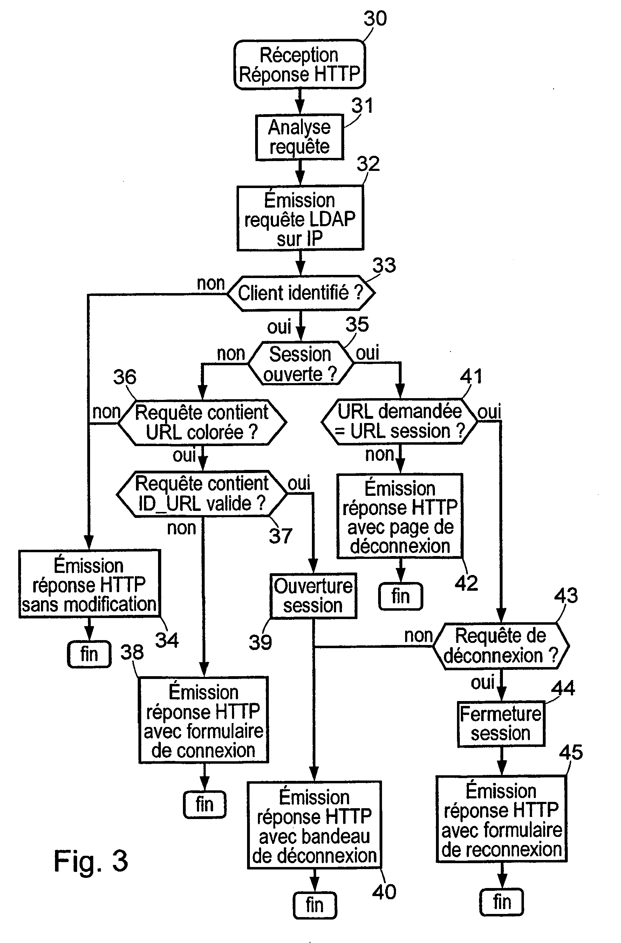

La figure 3 illustre la procédure 30 conforme au procédé selon l'invention, qui est exécutée par le module de contrôle d'accès 11 lorsqu'il reçoit une réponse HTTP provenant du réseau Internet et destinée à un terminal 10a-10c d'utilisateur du fournisseur d'accès 6.

A la première étape 31 de cette procédure, le module 11 analyse la requête HTTP émise par l'utilisateur, qui est contenue dans la réponse HTTP reçue, pour en extraire l'adresse IP du terminal d'utilisateur, l'adresse URL demandée par l'utilisateur et éventuellement un identifiant ID_URL de site dont l'accès est contrôlé.

A l'étape 32 suivante, le module 11 interroge l'annuaire LDAP 13 via le module d'interface LDAP 12, afin d'obtenir l'identifiant de l'utilisateur correspondant à l'adresse IP extraite. Lorsque le module d'interface 12 renvoie la réponse, le module 11 exécute l'étape suivante 33 consistant à déterminer si l'utilisateur ayant l'adresse IP extraite de la requête HTTP a été reconnu. Si tel n'est pas le cas, l'utilisateur ne peut pas bénéficier du service de contrôle d'accès et le module 11 transmet à celui-ci la réponse émise par le serveur 4 auquel il a accédé sans modification (étape 34). Dans le cas contraire, le module 11 exécute l'étape 35 consistant à lire le fichier de suivi de sessions 15 pour déterminer s'il existe une session en cours pour l'identifiant de l'utilisateur ID_CL fourni par le module d'interface LDAP 12.

Si aucune session en cours n'est associée à l'utilisateur ID_CL, le module 11 exécute l'étape 36, consistant à déterminer à l'aide du fichier de configuration 16 si l'adresse URL demandée par l'utilisateur dans sa requête correspond à une adresse URL d'un site dont l'accès est contrôlé. Si tel n'est pas le cas, le module 11 passe à l'étape 34 de transmission vers le terminal de l'utilisateur de la réponse HTTP reçue du serveur 4 sans modification. Dans le cas contraire, le module 11 exécute l'étape 37 consistant à déterminer si oui ou non la requête HTTP contient un identifiant ID_URL valide de site dont l'accès est contrôlé.
Si la requête contient un identifiant ID_URL, cet identifiant est vérifié par la lecture du fichier de suivi de sessions 15 en regardant l'identifiant ID_URL correspondant à une session en attente d'ouverture.

Dans le cas contraire, le module 11 exécute l'étape 38 consistant d'une part, à remplacer le contenu de la réponse HTTP reçue par un formulaire de connexion invitant l'utilisateur à introduire un identifiant ID_URL du site auquel il souhaite accéder, qui lui a été préalablement communiqué, et d'autre part, à émettre cette réponse à l'utilisateur par l'intermédiaire du serveur cache 3.

Si l'utilisateur souhaite bénéficier d'avantages (par exemple un coût de connexion réduit ou gratuit), il remplit le formulaire et le renvoie sous la forme d'une requête vers le site dont l'accès est contrôlé. Ce formulaire est renvoyé sous la forme d'une réponse à l'utilisateur et intercepté par le serveur cache 3 qui l'envoie au serveur 5. La réception de cette réponse par le serveur 5 déclenche à nouveau la procédure 30, et dans ce cas, la requête contenue dans la réponse contient un identifiant de site ID_URL.

Si à l'étape 37, la requête HTTP contenue dans la réponse contient un identifiant ID_URL valide de site dont l'accès est contrôlé (dans le cas où le fichier de suivi de session 15 ne contient pas de session en cours pour l'utilisateur identifié), le module 11 exécute l'étape 39 consistant à ouvrir une session en modifiant la ligne dans le fichier de suivi de sessions 15 spécifiant une session en cours démarrée à la date courante pour les identifiants de l'utilisateur ID_CL et du site ID_URL. A cet effet, il inscrit dans cette ligne l'heure courante en tant qu'heure de début de session, et met la valeur de la durée de session à 0.

A l'étape suivante 40, le module 11 modifie la page Web émise en réponse par le serveur 4 en y ajoutant un bandeau de déconnexion contenant un bouton de déconnexion.

Si à l'étape 35 une session était en cours, le module 11 exécute l'étape 41 consistant à déterminer si l'identifiant ID_URL de site correspond à celui inscrit dans le fichier de suivi de sessions 15 pour la session correspondante et si l'adresse URL demandée dans la requête HTTP correspond au site désigné par l'identifiant ID_URL. Si tel n'est pas le cas, le module 11 remplace le contenu de la réponse HTTP par une page de déconnexion invitant l'utilisateur à se déconnecter du site en cours de consultation, dont l'accès est contrôlé, avant d'accéder à l'adresse URL demandée dans la requête, puis il émet cette réponse HTTP modifiée vers le terminal de l'utilisateur (étape 42). Dans le cas contraire, le module 11 exécute l'étape 43 consistant à examiner si le contenu de la requête HTTP contient une requête de déconnexion. Si tel n'est pas le cas, le module 11 passe à l'étape 40 dans laquelle la réponse HTTP du site est transmise vers le terminal de l'utilisateur avec le bandeau de déconnexion. Si au contraire la requête HTTP contient une requête de déconnexion, le module exécute l'étape 44 consistant à fermer la session dans le fichier de suivi de sessions 15. Cette étape est suivie d'une étape 45 d'insertion dans la réponse HTTP d'un formulaire de reconnexion et d'émission de cette réponse vers l'utilisateur. Le formulaire de reconnexion permet d'éviter à l'utilisateur de saisir à nouveau l'identifiant ID_URL s'il souhaite se reconnecter au site qu'il vient de quitter.

Pour fermer une session, le module 11 met à jour le fichier de suivi de session 15 en modifiant la valeur de l'état de session pour signaler que la session est fermée, puis en mettant à jour le champ durée en calculant la durée d'ouverture de la session entre l'heure courante et l'heure de début de session figurant dans le champ contenant l'heure de début de session. Enfin, il met à 0 la valeur de ce dernier champ.

Par ailleurs, le module de gestion de sessions 14 gère des temporisations qui sont déclenchées à l'ouverture de chaque session et réactivées à chaque interrogation effectuée pour la session par le module 11, de manière à fermer les sessions ouvertes pour lesquelles le serveur 5 n'a reçu aucune réponse émise vers l'utilisateur correspondant, pendant la durée de la temporisation.

Tel que représenté sur la figure 4, le module 11 peut être réalisé sous la forme d'un module 25 assurant le service proprement dit de contrôle d'accès et de transformation de réponses HTTP, indépendamment du protocole ICAP, ce module étant couplé à un adaptateur de flux ICAP 26 gérant les échanges effectués conformément au protocole ICAP avec le serveur cache 3. Un tel adaptateur de flux ICAP est décrit dans la demande de brevet français déposée par la Demanderesse et publiée sous le numéro 2 823 044.

## Revendications

1. Procédé de contrôle d'accès à des sites Internet (4) de fournisseurs de contenus ou de services, pour contrôler l'accès à ces sites par des terminaux (10a à 10c) par l'intermédiaire d'un réseau de transmission de données (1),
**caractérisé en ce qu'**il comprend les étapes consistant à :
- mettre en oeuvre un service de contrôle d'accès qui intercepte toutes les réponses émises par les sites, destinées aux terminaux d'utilisateurs (10a à 10c),
- analyser (31) chacune des réponses interceptées pour en extraire une information d'identification d'utilisateur, une adresse de site, et un code d'accès de site,
- déterminer (36) si l'adresse de site extraite correspond à un site dont l'accès est contrôlé, et déterminer (35) s'il existe une session en cours correspondant à l'information d'identification d'utilisateur extraite,
- s'il n'existe pas de session en cours correspondant à l'information d'identification d'utilisateur extraite et si le code d'accès extrait est valide, ouvrir (39) une session pour l'utilisateur correspondant à l'information d'identification d'utilisateur extraite,
- modifier (40) toutes les réponses interceptées incluant une information d'identification d'utilisateur et un code d'accès de site correspondant à une session en cours, de manière à déclencher sur le terminal de l'utilisateur l'affichage d'une commande de fermeture de session que l'utilisateur peut activer lorsqu'il souhaite ne plus accéder au site, et
- retransmettre (40) vers les utilisateurs les réponses interceptées et modifiées.

2. Procédé selon la revendication 1,
**caractérisé en ce que** l'information d'identification d'utilisateur extraite des réponses interceptées est une adresse d'utilisateur dans le réseau de transmission de données, le procédé comprenant en outre une étape de détermination (32) d'un identifiant d'utilisateur à partir de l'adresse d'utilisateur extraite de chaque réponse interceptée, à l'aide d'une table de correspondance (13).

3. Procédé selon la revendication 2,
**caractérisé en ce que** si l'adresse d'utilisateur extraite d'une réponse interceptée ne correspond pas à un identifiant d'utilisateur, la réponse interceptée est transmise (34) à l'utilisateur sans modification.

4. Procédé selon la revendication 2 ou 3,
**caractérisé en ce que** s'il n'existe pas de session en cours correspondant à l'information d'identification d'utilisateur extraite, si l'adresse d'utilisateur extraite d'une réponse interceptée correspond à un identifiant d'utilisateur, et si l'adresse de site extraite correspond à un site dont l'accès est contrôlé, la réponse interceptée est modifiée (38) de manière à déclencher sur le terminal de l'utilisateur l'affichage d'une page invitant l'utilisateur à saisir un code d'accès au site correspondant à l'adresse de site extraite.

5. Procédé selon l'une des revendications 1 à 4,
**caractérisé en ce que** s'il n'existe pas de session en cours correspondant à l'information d'identification d'utilisateur extraite et si l'adresse de site extraite ne correspond pas à un site dont l'accès est contrôlé, la réponse interceptée est transmise (34) à l'utilisateur sans modification.

6. Procédé selon l'une des revendications 1 à 5,
**caractérisé en ce que** s'il existe une session en cours correspondant à l'information d'identification d'utilisateur extraite et si l'adresse de site extraite ne correspond pas à un site dont l'accès est contrôlé, la réponse interceptée est modifiée (42) de manière à déclencher sur le terminal de l'utilisateur l'affichage d'une page invitant l'utilisateur à émettre une commande de fermeture de la session en cours.

7. Procédé selon l'une des revendications 1 à 6,
**caractérisé en ce que** si une réponse interceptée contient une commande de fermeture de session, il comprend en outre une étape de fermeture de session (44) pour fermer une session correspondant à l'information d'identification d'utilisateur extraite de la réponse.

8. Procédé selon la revendication 7,
**caractérisé en ce que** la fermeture d'une session est accompagnée de la modification (38) de la réponse correspondante, incluant la commande de fermeture de session, de manière à déclencher sur le terminal de l'utilisateur l'affichage d'une page invitant l'utilisateur à se reconnecter à un site dont l'accès est protégé.

9. Système de contrôle d'accès à des sites Internet (4) de fournisseurs de contenus ou de services, pour contrôler l'accès à ces sites par des terminaux d'utilisateurs (10a à 10c) par l'intermédiaire d'un réseau de transmission de données (1),
**caractérisé en ce qu'**il comprend un serveur de contrôle d'accès (5) connecté à un serveur cache (3) interposé entre les terminaux d'utilisateurs (10a à 10c) et le réseau de transmission de données (1), le serveur cache étant conçu pour intercepter toutes les réponses provenant du réseau et destinées aux terminaux d'utilisateurs et pour transmettre les réponses interceptées au serveur de contrôle d'accès, le serveur de contrôle d'accès comprenant :
- des moyens (11, 25) pour extraire de chacune des réponses interceptées une information d'identification d'utilisateur, une adresse de site, et un code d'accès de site,
- des moyens (11, 25) pour déterminer si l'adresse de site extraite correspond à un site dont l'accès est contrôlé, et s'il existe une session en cours correspondant à l'information d'identification d'utilisateur extraite,
- des moyens (11, 25) pour ouvrir une session pour l'utilisateur correspondant à l'information d'identification d'utilisateur extraite s'il n'existe pas de session en cours correspondant à l'information d'identification d'utilisateur extraite et si le code d'accès extrait est valide,
- des moyens (11, 25) pour modifier toutes les réponses interceptées incluant une information d'identification d'utilisateur et un code d'accès de site correspondant à une session en cours, de manière à déclencher sur le terminal de l'utilisateur l'affichage d'une commande de fermeture de session que l'utilisateur peut activer lorsqu'il souhaite ne plus accéder au site, et
- des moyens (11, 25, 26) pour retransmettre vers le serveur cache à destination des terminaux d'utilisateurs les réponses interceptées et modifiées.

10. Système selon la revendication 9,
**caractérisé en ce que** l'information d'identification d'utilisateur extraite des réponses interceptées est une adresse d'utilisateur dans le réseau de transmission de données, le système comprenant en outre des moyens (12, 13, 17) pour déterminer à partir de l'adresse de l'utilisateur un identifiant d'utilisateur, à l'aide d'une table de correspondance (13).

11. Système selon la revendication 10,
**caractérisé en ce que** la table de correspondance (13) est un annuaire de type LDAP.

12. Système selon la revendication 11,
**caractérisé en ce qu'**il comprend une mémoire cache (17) conçue pour stocker des réponses à des interrogations d'identifiant d'utilisateur, fournies par l'annuaire de type LDAP (13), en vue de pouvoir fournir plus rapidement une réponse à une interrogation lorsque la réponse est stockée dans la mémoire cache (17).

13. Système selon la revendication 9 ou 12,
**caractérisé en ce qu'**il comprend un fichier de suivi de session (15) comprenant pour chaque session un identifiant d'utilisateur, un identifiant de site, un état en cours ou fermé de la session, une durée de session et une heure de début de session.

14. Système selon l'une des revendications 9 à 13,
**caractérisé en ce que** les réponses interceptées sont conformes au protocole HTTP et les communications entre le serveur cache (3) et le serveur de contrôle d'accès (5) sont conformes au protocole ICAP.

## Claims

1. Access control method to contents or services providers Internet sites(4), for controlling access to these sites by terminals (10a to 10c) by way of a data transmission network (1),
**characterized in that** it comprises the steps consisting in:
- implementing an access control service which intersects all the responses sent by the sites, intended for user terminals (10a to 10c),
- analysing (31) each of the responses intercepted so as to extract therefrom user identification information, a site address, and a site access code,
- determining (36) whether the site address extracted corresponds to a site whose access is controlled, and determining (35) whether there exists a session in progress corresponding to the user identification information extracted,
- if there exists no session in progress corresponding to the user identification information extracted and if the access code extracted is valid, opening (39) a session for the user corresponding to the user identification information extracted,
- modifying (40) all the responses intersected including a user identification information and a site access code corresponding to a session in progress, in such a way as to trigger on the terminal of the user the displaying of a session closure command that the user can activate when he wishes no longer to access the site, and
- retransmitting (40) to the users the responses intercepted and modified.

2. Method according to Claim 1,
**characterized in that** the user identification information extracted from the responses intercepted is a user address in the data transmission network, the method furthermore comprising a step (32) of determining a user identifier on the basis of the user address extracted from each response intercepted, with the aid of a correspondence table (13).

3. Method according to Claim 2,
**characterized in that** if the user address extracted from an intercepted response does not correspond to a user identifier, the intercepted response is transmitted (34) to the user without modification.

4. Method according to Claim 2 or 3,
**characterized in that** if there exists no session in progress corresponding to the user identification information extracted, if the user address extracted from an intercepted response corresponds to a user identifier, and if the site address extracted corresponds to a site whose access is controlled, the intercepted response is modified (38) in such a way as to trigger on the terminal of the user the displaying of a page inviting the user to enter a code for access to the site corresponding to the site address extracted.

5. Method according to one of Claims 1 to 4,
**characterized in that** if there exists no session in progress corresponding to the user identification information extracted and if the site address extracted does not correspond to a site whose access is controlled, the response intercepted is transmitted (34) to the user without modification.

6. Method according to one of Claims 1 to 5,
**characterized in that** if there exists a session in progress corresponding to the user identification information extracted and if the site address extracted does not correspond to a site whose access is controlled, the response intercepted is modified (42) in such a way as to trigger on the terminal of the user the displaying of a page inviting the user to send a command for closure of the session in progress.

7. Method according to one of Claims 1 to 6,
**characterized in that** if an intercepted response contains a session closure command, it furthermore comprises a session closure step (44) for closing a session corresponding to the user identification information extracted from the response.

8. Method according to Claim 7,
**characterized in that** the closure of a session is accompanied by the modification (38) of the corresponding response, including the session closure command, in such a way as to trigger on the terminal of the user the displaying of a page inviting the user to reconnect to a site whose access is protected.

9. Access control system to contents or services providers Internet sites (4), for controlling access to these sites by user terminals (10a to 10c) by way of a data transmission network (1),
**characterized in that** it comprises an access control server (5) connected to a cache server (3) interposed between the user terminals (10a to 10c) and the data transmission network (1) the cache server being designed to intercept all the responses originating from the network and intended for the user terminals and to transmit the responses intercepted to the access control server, the access control server comprising,
- means (11, 25) for extracting from each of the responses intercepted a user identification information, a site address, and a site access code,
- means (11, 25) for determining whether the site address extracted corresponds to a site whose access is controlled, and determining whether there exists a session in progress corresponding to the user identification information extracted,
- means (11, 25) for opening a session for the user corresponding to the user identification information extracted if there exists no session in progress corresponding to the user identification information extracted and if the access code extracted is valid,
- means (11, 25) for modifying all the responses intersected including a user identification information and a site access code corresponding to a session in progress, in such a way as to trigger on the terminal of the user the displaying of a session closure command that the user can activate when he wishes no longer to access the site, and
- means (11, 25, 26) for retransmitting to the cache server intended for the user terminals the responses intercepted and modified.

10. System according to Claim 9,
**characterized in that** the user identification information extracted from the responses intercepted is a user address in the data transmission network, the system furthermore comprising means (12, 13, 17) for determining a user identifier on the basis of the user address, with the aid of a correspondence table (13).

11. System according to Claim 10,
**characterized in that** the correspondence table (13) is an LDAP type directory.

12. System according to Claim 11,
**characterized in that** it comprises a cache memory (17) designed to store responses to user identifier queries, provided by the LDAP type directory (13), with a view to being able to more rapidly provide a response to a query when the response is stored in the cache memory (17).

13. System according to Claim 9 or 12,
**characterized in that** it comprises a session tracking file (15) comprising for each session a user identifier, a site identifier, a state in progress or closed of the session, a session duration and a session start time.

14. System according to one of Claims 9 to 13,
**characterized in that** the responses intercepted conform to the HTTP protocol and the communications between the cache server (3) and the access control server (5) conform to the ICAP protocol.

## Patentansprüche

1. Verfahren der Zugriffskontrolle zu Internetseiten (4) von Inhalte- oder Service-Lieferanten, um den Zugriff von Terminals (10a bis 10c) zu diesen Seiten über ein Datenübertragungsnetz (1) zu kontrollieren,
**dadurch gekennzeichnet, dass** es folgende Schritte aufweist:
- Implementierung eines Zugriffskontrolldiensts, der alle von den Seiten gesendeten Antworten auffängt, die für die Benutzerterminals (10a bis 10c) bestimmt sind,
- Analyse (31) jeder der aufgefangenen Antworten, um daraus eine Benutzeridentifikationsinformation, eine Internet-Adresse und einen Internet-Zugriffscode zu entnehmen,
- Bestimmen (36), ob die entnommene Internet-Adresse einer Internetseite entspricht, deren Zugriff kontrolliert wird, und Bestimmen (35), ob es eine laufende Dialogsitzung gibt, die der entnommenen Benutzeridentifikationsinformation entspricht,
- wenn es keine der entnommenen Benutzeridentifikationsinformation entsprechende laufende Dialogsitzung gibt, und wenn der entnommene Zugriffscode gültig ist, Starten (39) einer Dialogsitzung für den Benutzer entsprechend der entnommenen Benutzeridentifikationsinformation,
- Verändern (40) aller aufgefangenen Antworten, die eine Benutzeridentifikationsinformation und einen Internet-Zugriffscode entsprechend einer laufenden Dialogsitzung enthalten, um im Terminal des Benutzers die Anzeige eines Befehls zum Beenden der Dialogsitzung auszulösen, den der Benutzer aktivieren kann, wenn er keinen Zugriff zur Internetseite mehr möchte, und
- Rückübertragung (40) der aufgefangenen und veränderten Antworten an die Benutzer.

2. Verfahren nach Anspruch 1, **dadurch gekennzeichnet, dass** die aus den aufgefangenen Antworten entnommene Benutzeridentifikationsinformation eine Benutzeradresse im Datenübertragungsnetz ist, wobei das Verfahren weiter einen Schritt der Bestimmung (32) einer Benutzerkennung ausgehend von der aus jeder aufgefangenen Antwort entnommenen Benutzeradresse mit Hilfe einer Entsprechungstabelle (13) aufweist.

3. Verfahren nach Anspruch 2, **dadurch gekennzeichnet, dass**, wenn die aus einer aufgefangenen Antwort entnommene Benutzeradresse keiner Benutzerkennung entspricht, die aufgefangene Antwort ohne Veränderung an den Benutzer übertragen wird (34).

4. Verfahren nach Anspruch 2 oder 3, **dadurch gekennzeichnet, dass**, wenn es keine der entnommenen Benutzeridentifikationsinformation entsprechende laufende Dialogsitzung gibt, wenn die aus einer aufgefangenen Antwort entnommene Benutzeradresse einer Benutzerkennung entspricht, und wenn die entnommene Internet-Adresse einer Internetseite entspricht, deren Zugriff kontrolliert wird, die aufgefangene Antwort so verändert wird (38), dass im Terminal des Benutzers die Anzeige einer Seite ausgelöst wird, die den Benutzer auffordert, einen Zugriffscode zur Internetseite entsprechend der entnommenen Internet-Adresse einzugeben.

5. Verfahren nach einem der Ansprüche 1 bis 4, **dadurch gekennzeichnet, dass**, wenn es keine der entnommenen Benutzeridentifikationsinformation entsprechende laufende Dialogsitzung gibt, und wenn die entnommene Internet-Adresse keiner Internetseite entspricht, deren Zugriff kontrolliert wird, die aufgefangene Antwort ohne Veränderung an den Benutzer zurückübertragen wird (34).

6. Verfahren nach einem der Ansprüche 1 bis 5, **dadurch gekennzeichnet, dass**, wenn es eine der entnommenen Benutzeridentifikationsinformation entsprechende laufende Dialogsitzung gibt, und wenn die entnommene Internet-Adresse keiner Internetseite entspricht, deren Zugriff kontrolliert wird, die aufgefangene Antwort so verändert wird (42), dass im Terminal des Benutzers die Anzeige einer Seite ausgelöst wird, die den Benutzer auffordert, einen Befehl zum Beenden der laufenden Dialogsitzung auszugeben.

7. Verfahren nach einem der Ansprüche 1 bis 6, **dadurch gekennzeichnet, dass**, wenn eine aufgefangene Antwort einen Befehl zum Beenden der Dialogsitzung enthält, es außerdem einen Schritt des Beendens der Dialogsitzung (44) aufweist, um eine Dialogsitzung entsprechend der aus der Antwort entnommenen Benutzeridentifikationsinformation zu beenden.

8. Verfahren nach Anspruch 7, **dadurch gekennzeichnet, dass** das Beenden einer Dialogsitzung von der Veränderung (38) der entsprechenden Antwort begleitet wird, die den Befehl zum Beenden der Dialogsitzung enthält, um im Terminal des Benutzers die Anzeige einer Seite auszulösen, die den Benutzer auffordert, sich wieder mit einer Website zu verbinden, deren Zugriff geschützt ist.

9. System der Zugriffskontrolle zu Internetseiten (4) von Inhalte- oder Service-Lieferanten, um den Zugriff von Terminals (10a bis 10c) zu diesen Seiten über ein Datenübertragungsnetz (1) zu kontrollieren,
**dadurch gekennzeichnet, dass** es einen Zugriffskontrollserver (5) aufweist, der mit einem Cache-Server (3) verbunden ist, der zwischen die Benutzerterminals (10a bis 10c) und das Datenübertragungsnetz (1) geschaltet ist, wobei der Cache-Server so gestaltet ist, dass er alle Antworten auffängt, die vom Netz kommen und für die Benutzerterminals bestimmt sind, und dass er die aufgefangenen Antworten an den Zugriffskontrollserver überträgt, wobei der Zugriffskontrollserver aufweist:
- Mittel (11, 25), um aus jeder der aufgefangenen Antworten eine Benutzeridentifikationsinformation, eine Internet-Adresse und einen Internet-Zugriffscode zu entnehmen,
- Mittel (11, 25), um zu bestimmen, ob die entnommene Internet-Adresse einer Internetseite entspricht, deren Zugriff kontrolliert wird, und ob es eine laufende Dialogsitzung entsprechend der entnommenen Benutzeridentifikationsinformation gibt,
- Mittel (11, 25), um eine Dialogsitzung für den Benutzer entsprechend der entnommenen Benutzeridentifikationsinformation zu starten, wenn es keine der entnommenen Benutzeridentifikationsinformation entsprechende laufende Dialogsitzung gibt und wenn der entnommene Zugriffscode gültig ist,
- Mittel (11, 25), um alle aufgefangenen Antworten, die eine Benutzeridentifikationsinformation und einen Internet-Zugriffscode entsprechend einer laufenden Dialogsitzung enthalten, zu verändern, um im Terminal des Benutzers die Anzeige eines Befehls zum Beenden der Dialogsitzung auszulösen, den der Benutzer aktivieren kann, wenn er keinen Zugriff mehr zur Internetseite möchte, und
- Mittel (11, 25, 26), um die aufgefangenen und veränderten Antworten zum Cache-Server an die Adresse der Benutzerterminals zurück zu übertragen.

10. System nach Anspruch 9, **dadurch gekennzeichnet, dass** die aus den aufgefangenen Antworten entnommene Benutzeridentifikationsinformation eine Benutzeradresse im Datenübertragungssystem ist, wobei das System außerdem Mittel (12, 13, 17) aufweist, um ausgehend von der Adresse des Benutzers mit Hilfe einer Entsprechungstabelle (13) eine Benutzerkennung zu bestimmen.

11. System nach Anspruch 10, **dadurch gekennzeichnet, dass** die Entsprechungstabelle (13) ein Verzeichnis vom Typ LDAP ist.

12. System nach Anspruch 11, **dadurch gekennzeichnet, dass** es einen Cache-Speicher (17) aufweist, der so gestaltet ist, dass er Antworten auf Benutzerkennungsabfragen speichert, die vom Verzeichnis vom Typ LDAP (13) geliefert werden, um schneller eine Antwort auf eine Abfrage liefern zu können, wenn die Antwort im Cache-Speicher (17) gespeichert ist.

13. System nach Anspruch 9 oder 12, **dadurch gekennzeichnet, dass** es eine Dialogsitzung-Ablaufdatei (15) aufweist, die für jede Dialogsitzung eine Benutzerkennung, eine Internet-Kennung, einen laufenden oder beendeten Zustand der Dialogsitzung, eine Dialogsitzungsdauer und eine Anfangszeit der Dialogsitzung enthält.

14. System nach einem der Ansprüche 9 bis 13, **dadurch gekennzeichnet, dass** die aufgefangenen Antworten dem HTTP-Protokoll entsprechen und die Kommunikationen zwischen dem Cache-Server (3) und dem Zugriffskontrollserver (5) dem ICAP-Protokoll entsprechen.
